# EUROPÄISCHE PATENTANMELDUNG

(11) **EP 3 024 101 A1**
(43) Veröffentlichungstag der Anmeldung: **25.05.2016**
(21) Anmeldenummer: 15194107.7
(22) Anmeldetag: 11.11.2015
(51) Int. Cl.: H02G 3/04, F16L 11/18

(54) **FLEXIBLES SCHUTZROHR**

(30) Priorität: 18.11.2014 DE 102014116843
(71) Anmelder: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Nunnenkamp, Jörg

(57) **Zusammenfassung**

Gegenstand der vorliegenden Erfindung ist ein flexibles Schutzrohr, insbesondere Kabelschutzrohr, welches mit mehreren ineinander gesteckten Rohrsegmenten (1) ausgerüstet ist. Die einzelnen Rohrsegmente (1) sind zueinander axial längenveränderlich und/oder tangential winkelveränderbar ausgebildet. Jedes Rohrsegment (1) verfügt über eine Umfangsnut (2), einen Umfangswulst (3) sowie eine Umfangsdichtung (6). Erfindungsgemäß ist die Umfangsdichtung (6) als Formänderungsdichtung (6) ausgebildet.

## Beschreibung

Die Erfindung betrifft ein flexibles Schutzrohr, insbesondere Kabelschutzrohr, mit mehreren ineinander gesteckten Rohrsegmenten, wobei die Rohrsegmente zueinander axial längenveränderlich und/oder tangential winkelveränderbar ausgebildet sind, und wobei jedes Rohrsegment eine Umfangsnut, einen Umfangswulst sowie eine Umfangsdichtung aufweist.

Schutzrohre und insbesondere Kabelschutzrohre dienen typischerweise dazu, in ihrem Innern elektrische Leitungen, Glasfaserleitungen, Telekommunikationsleitungen etc. aufzunehmen. Mit Hilfe des Schutzrohres bzw. Kabelschutzrohres werden die fraglichen Leitungen vor Beschädigungen geschützt. Dazu erfolgt ergänzend meistens eine Erdverlegung der fraglichen Schutzrohre bzw. Kabelschutzrohre.

Im Rahmen der EP 2 477 289 A1 wird ein Kabelschutzrohr bzw. Kabelführungsrohr der Anmelderin im Detail beschrieben. Neben solchen starren bzw. gleichsam starren und bekannten Schutzrohren und insbesondere Kabelschutzrohren existieren im Stand der Technik auch flexible Varianten, wie sie beispielsweise im Rahmen der EP 0 197 046 B1 beschrieben werden. Einschlägig ist auch die Schutzummantelung für Kabel oder Leitungen entsprechend der DE 699 11 119 T2.

Dabei wird überwiegend so vorgegangen, dass der Umfangswulst eines Rohrsegmentes in die Umfangsnut des benachbarten Rohrsegmentes eingreift. Je nach der Ausprägung der Umfangswulst sowie der Umfangsnut ergibt sich auf diese Weise ein axiales Spiel der beiden Rohrsegmente zueinander. Das heißt, die Rohrsegmente sind zueinander längenveränderlich ausgebildet. Darüber hinaus können die beiden Rohrsegmente im Regelfall tangential winkelveränderbar zueinander ausgerichtet werden. Dabei haben sich Winkel zwischen den einzelnen Rohrsegmenten im Bereich von 0° bis 10° und insbesondere 0° bis 5° als technisch machbar erwiesen.

Um diese axial längenveränderliche Auslegung der benachbarten Rohrsegmente zueinander ebenso umsetzen zu können wie die tangentiale Winkelveränderbarkeit, ist die Breite der Umfangsnut größer als die Breite des Umfangswulstes ausgelegt. Sowohl die Umfangsnut als auch der Umfangswulst sind im Allgemeinen ringförmig ausgebildet. Außerdem wird der ringförmige Umfangswulst des einen Rohrsegmentes unter Krafteinwirkung in die Umfangsnut des benachbarten Rohrsegmentes in Eingriff gebracht, so dass die beiden Rohrsegmente wie beschrieben zueinander axial längenveränderlich ausgelegt sind und sich meistens auch tangential winkelveränderbar zueinander verschieben lassen. Das ist im Detail beispielsweise in der DE 699 11 119 T2 beschrieben.

Darüber hinaus beschreibt die gattungsbildende EP 0 676 840 B1 ein flexibles Schutzrohr, bei welchem der Umfangswulst nicht durchgängig ringförmig ausgebildet ist, sondern sich aus versetzt zueinander angeordneten elastischen, nasenförmigen Haken zusammensetzt. Diese Haken sind für den Eingriff in die Umfangsnut des benachbarten Rohrsegmentes vorgesehen und ausgelegt. Der Vorteil dieser Ausführungsform liegt darin, dass sich einzelne Rohrsegmente nicht nur miteinander relativ problemlos verbinden lassen, sondern auch eine Trennung einzelner Rohrsegmente voneinander möglich ist, auch auf einer Baustelle. Das lässt sich auf das Zusammenspiel der mehreren Haken einerseits und der die Haken aufnehmenden Umfangsnut andererseits zurückführen.

Auf diese Weise wird die Montage erleichtert und insgesamt ein flexibles Schutzrohr zur Verfügung gestellt, welches ganz individuell - auch noch am Verlegeort - an die tatsächlichen Anforderungen angepasst werden kann. Das stellt einen Vorteil gegenüber der prinzipiell in der Praxis auch verfolgten Möglichkeit dar, ein gerades und starres Schutzrohr durch Wärmeeinwirkung in die gewünschte Form zu biegen. Aus diesem Grund haben sich flexible Schutzrohre entsprechend der EP 0 676 840 B1 zunehmend in der Praxis als günstig erwiesen und damit durchgesetzt.

Allerdings besteht bei den bekannten Schutzrohren ein Dichtigkeitsproblem. Tatsächlich sorgen im Rahmen der DE 699 11 119 T2 der Umfangswulst und die Umfangsnut mit ihren aneinander anliegenden Auflageflächen für eine dichte Verbindung oder sollen dies tun. Bei der EP 0 676 840 B1 ist hierzu eine Umfangsdichtung vorgesehen, bei welcher es sich um einen simplen O-Ring handelt.

Sobald beispielsweise zwei benachbarte Rohrsegmente in ihrem Winkel zueinander verändert werden, führt dies dazu, dass die fragliche O-Ringdichtung mehr oder minder komprimiert wird. Es handelt sich also um eine sogenannte Kompressionsdichtung. Bei solchen Kompressionsdichtungen besteht jedoch einerseits das Problem, dass unverändert Undichtigkeiten beobachtet werden und andererseits nur geringe Winkel der Rohrsegmente zueinander überhaupt realisiert werden können. Hier setzt die Erfindung ein.

Der Erfindung liegt das technische Problem zugrunde, ein derartiges flexibles Schutzrohr so weiter zu entwickeln, dass die einzelnen Rohrsegmente signifikante Schrägstellungen zueinander einnehmen können und dennoch zugleich einwandfreie Dichtigkeit gewährleistet ist.

Zur Lösung dieser technischen Problemstellung ist im Rahmen der Erfindung ein gattungsgemäßes flexibles Schutzrohr dadurch gekennzeichnet, dass die Umfangsdichtung als Formänderungsdichtung ausgebildet ist.

Im Rahmen der Erfindung kommt also ausdrücklich keine Kompressionsdichtung zum Einsatz, also eine solche, die lediglich bei mehr oder minder ausgeprägter Kompression die erforderliche Dichtwirkung entfaltet. Vielmehr sorgt bei der erfindungsgemäß eingesetzten Formänderungsdichtung eine grundsätzliche Änderung der Querschnittsform der fraglichen Dichtung dafür, dass die gewünschte Dichtigkeit dauerhaft beobachtet wird.

Die Dichtigkeit des fraglichen flexiblen Schutzrohres ist von besonderer Bedeutung vor dem Hintergrund, dass solche Schutzrohre nicht nur überwiegend in der Erde verlegt werden, sondern beispielsweise eindringende Feuchtigkeit die im Innern befindlichen Kabel, Glasfaseradern etc. beschädigen kann und zu Funktionsstörungen führt. Außerdem erleichtert ein hermetisch geschlossenes flexibles Schutzrohr das Einziehen der fraglichen Kabel, weil hierzu typischerweise mit Druckluft gearbeitet wird und die fraglichen Kabel in ein solches Schutzrohr "eingeschossen" werden.

Erfindungsgemäß sorgt nun die als Formänderungsdichtung ausgebildete Umfangsdichtung dafür, dass die einzelnen gesteckten Rohrsegmente einwandfrei nach außen hin abgedichtet sind, so dass selbst komplexe Formen des solchermaßen hergestellten Schutzrohres über die gewünschte Dichtigkeit verfügen. Hierbei hat es sich als besonders vorteilhaft erwiesen, wenn die Umfangsdichtung als Lippendichtung ausgebildet ist. Eine solche Lippendichtung verfügt im Allgemeinen über einen formveränderlichen Fortsatz sowie eine den Fortsatz tragende Basis.

Die Dichtungswirkung der Formänderungsdichtung bzw. Lippendichtung im Beispielfall wird nun so erreicht und umgesetzt, dass die Lippe beim Ineinanderstecken benachbarter Rohrsegmente abgewinkelt wird. Das heißt, die Lippe wird mechanisch auf Biegung beansprucht. Da die Umfangsdichtung typischerweise aus einem elastomeren Kunststoff hergestellt ist, lässt sich eine solche Biegung problemlos und mit wenig Kraft umsetzen und realisieren. Das erleichtert das Ineinanderstecken der benachbarten Rohrsegmente.

Hinzukommt, dass die mechanisch auf Biegung beanspruchte Lippe viel größere Spalte abdichten kann, als dies mit einer reinen Kompressionsdichtung gelingt. Dadurch lassen sich erfindungsgemäß benachbarte Rohrsegmente signifikant im Winkel zueinander schrägstellen, und zwar ohne dass Dichtungsprobleme beobachtet werden. Auf diese Weise können Schutzrohre realisiert werden, die mit beispielsweise einer 180°-Biegung ausgerüstet sind. Ebensogut lassen sich aber auch S-bogenförmige Verläufe etc. umsetzen und realisieren. Tatsächlich werden Winkel zwischen den einzelnen Rohrsegmenten im Rahmen der Erfindung beobachtet, die zu einer Schrägstellung von 2° und mehr, insbesondere sogar von 3° und mehr bis maximal 10° korrespondieren.

Wie bereits erläutert, ist die erfindungsgemäße Umfangsdichtung als Formänderungsdichtung ausgebildet und verfügt in diesem Zusammenhang über die Basis und den von der Basis getragenen Fortsatz. Die Umfangsdichtung wird im Regelfall in einer Dichtungsnut aufgenommen. Dabei ist die Auslegung so getroffen, dass zumindest der formveränderliche Fortsatz über einen Rand der Dichtungsnut in Richtung des Rohrinneren vorkragt. Das heißt, die den Fortsatz tragende Basis füllt die Dichtungsnut überwiegend vollständig aus, wohingegen der Fortsatz über den Rand der Dichtungsnut in Richtung des Rohrinneren vorkragt und auf diese Weise mit dem ins Rohrinnere eingesteckten benachbarten Rohrsegment dichtend wechselwirken kann.

Meistens ist die Umfangsdichtung als kombinierte Formänderungs- sowie Kompressionsdichtung ausgelegt. Das heißt, die erfindungsgemäße Umfangsdichtung entfaltet ihre Dichtungswirkung nicht durch eine Formänderung alleine, sondern wird zusätzlich für die Dichtungswirkung komprimiert. Zu diesem Zweck ist die den Fortsatz tragende Basis typischerweise mit Hilfe von fußseitigen Rippen am Grund der Dichtungsnut abgestützt. Sobald die Dichtung eines Rohrsegmentes durch das in das Rohrsegment eingesteckte benachbarte Rohrsegment beaufschlagt wird, kommt es folglich nicht nur dazu, dass der formveränderliche Fortsatz bzw. die Lippe im Beispielfall mechanisch auf Biegung belastet wird, sondern zusätzlich die den Fortsatz tragende Basis komprimiert wird. Dabei mögen die fraglichen Rippen fußseitig der Basis soweit zusammengedrückt werden, dass die Basis mehr oder minder vollflächig am Grund der Dichtungsnut anliegt.

Der Umfangswulst des jeweiligen Rohrsegmentes setzt sich im Allgemeinen aus mehreren Haken zusammen. Der jeweilige Haken greift in die Umfangsnut am benachbarten Rohrsegment ein. Außerdem sind die Haken im Regelfall äquidistant beabstandet über den Umfang des betreffenden Rohrsegmentes angeordnet. Meistens kommen drei oder mehr Haken zum Einsatz, die jeweils äquidistant zueinander angeordnet sind, beispielsweise in einem Winkelabstand von 120° bei drei Haken. Sofern fünf Haken realisiert werden, beobachtet man einen Winkel von jeweils 72° zwischen den betreffenden Haken. Das gilt selbstverständlich nur beispielhaft.

In jedem Fall sind die Haken äquidistant beabstandet über den Umfang des jeweiligen Rohrsegmentes angeordnet. Außerdem sind die Haken elastisch und nasenförmig ausgebildet. Auf diese Weise lassen sich die Haken elastisch verformen und sind für den Eingriff am jeweils benachbarten Rohrsegment vorgesehen. Tatsächlich greifen die jeweiligen Haken in die Umfangsnut am benachbarten Rohrsegment ein. Außerdem ist die Auslegung meistens so getroffen, dass die Umfangsnut von einem Anschlag und insbesondere Ringanschlag begrenzt wird. Dieser Ringanschlag am Rohrsegment wird von den Haken des benachbarten Rohrsegmentes beim Ineinanderstecken übergriffen und sorgt dafür, dass die ineinandergesteckten Rohrsegmente sich nicht voneinander lösen können.

Der fragliche Anschlag bzw. Ringanschlag besitzt einen spezifischen Querschnitt. Tatsächlich ist der Anschlag mit einer geraden Kante an seiner Frontseite in Einsteckrichtung ausgerüstet, welche von den Haken des benachbarten und ineinandergesteckten Rohrsegmentes übergriffen wird. Demgegenüber verfügt die Rückseite in Einsteckrichtung über eine abgerundete Kante.

Auf diese Weise können die abgerundete Kante des Anschlages bzw. Ringanschlages einerseits und der über den Rand der Umfangsnut vorkragende formveränderliche Fortsatz der Umfangsdichtung andererseits miteinander wechselwirken. Tatsächlich lässt sich das benachbarte und eingesteckte Rohrsegment mit dem Anschlag soweit in der Umfangsnut verschieben, bis die abgerundete Kante an dem Fortsatz der Umfangsdichtung zur Anlage kommt. Die abgerundete Kante stellt dabei insgesamt sicher, dass die Umfangsdichtung bei diesem mechanischen Kontakt keine Beschädigung erfährt.

Außerdem ist die Auslegung so getroffen, dass der Fortsatz der Umfangsdichtung in der Einsteckrichtung auf Biegung belastet wird, folglich von der in Einsteckrichtung darauf zubewegten abgerundeten Kante des Anschlages fortbewegt wird. Das heißt, die abgerundete Kante des Anschlages bzw. Ringanschlages trifft beim mechanischen Kontakt mit dem verbogenen Fortsatz auf eine abgerundete Biegung dieses Fortsatzes. Dadurch werden letztendlich zwei bogenförmige Konturen aufeinander zubewegt und sind Beschädigungen der Umfangsdichtung ausgeschlossen. Zugleich wird der Verschiebeweg des Anschlages in Längsrichtung der Umfangsnut durch die Umfangsdichtung begrenzt. Das heißt, die Umfangsdichtung fungiert zugleich als Begrenzungsanschlag, welche das axiale Spiel des Anschlages bzw. Ringanschlages innerhalb der Umfangsnut zwischen der Umfangsdichtung einerseits und den Haken andererseits begrenzt.

Das alles gelingt unter Berücksichtigung einer großen Winkelbeweglichkeit der einzelnen Rohrsegmente zueinander. Zugleich verfügt ein solchermaßen aufgebautes flexibles Schutzrohr nach der Erfindung über eine Dichtigkeit, die bisher in diesem Kontext nicht für möglich gehalten worden ist. Das alles wird mit einem konstruktiv einfachen und folglich kostengünstigen Aufbau erreicht. Hierin sind die wesentlichen Vorteile zu sehen.

Im Folgenden wird die Erfindung anhand einer lediglich ein Ausführungsbeispiel darstellenden Zeichnung näher erläutert; es zeigen:
Fig. 1 das erfindungsgemäße flexible Schutzrohr im Schnitt in einer Übersicht, und zwar einen Schnitt A-A durch den Gegenstand nach Fig. 3,
Fig. 2 ein einzelnes Rohr im Längsschnitt,
Fig. 3 eine Frontansicht des jeweiligen Rohrsegmentes und
Fig. 4 einen vergrößerten Ausschnitt aus der Fig. 1 im Bereich der ineinandergesteckten Rohrsegmente.

In den Figuren ist ein flexibles Schutzrohr dargestellt. Das Schutzrohr setzt sich aus mehreren ineinandergesteckten Rohrsegmenten 1 zusammen. Das jeweilige Rohrsegment 1 ist regelmäßig aus Kunststoff gefertigt. Tatsächlich handelt es sich typischerweise um ein Kunststoffspritzgussteil aus PE (Polyethylen), PP (Polypropylen) oder einem vergleichbaren Kunststoff.

Man erkennt, dass sich das jeweilige Rohrsegment 1 aus einem tonnenförmigen Bereich 1a und einem daran in Einsteckrichtung E anschließenden zylindrischen Bereich 1b zusammensetzt. Die Einsteckrichtung E markiert dabei die Richtung, in welcher die einzelnen Rohrsegmente 1 ineinandergesteckt werden, um das dargestellte und gewünschte flexible Schutzrohr zu definieren.

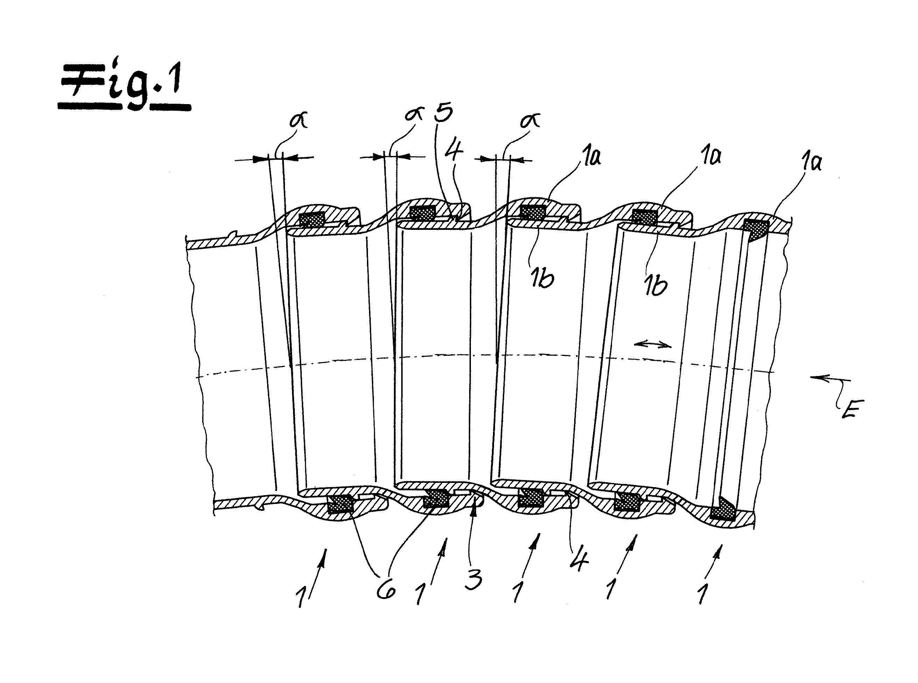

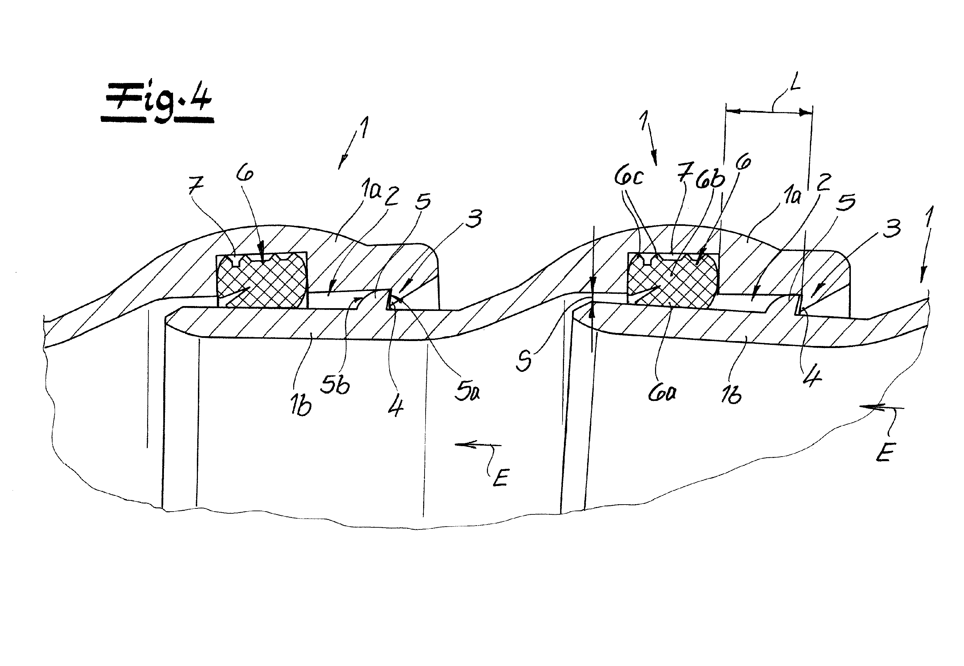

Der jeweils tonnenförmige Bereich 1a des Rohrsegmentes 1 stellt sicher, dass benachbarte Rohrsegmente 1 zueinander tangential veränderbar ausgebildet sind bzw. ausgerichtet werden können. Tatsächlich werden in diesem Zusammenhang Winkel α für eine Schrägstellung benachbarter Rohrsegmente 1 zueinander beobachtet, die im Bereich von ca. 3° angesiedelt sind. Das heißt, das jeweilige Rohrsegment 1 lässt sich im Vergleich zum benachbarten Rohrsegment 1 tangential verschieben, wie die Fig. 1 bzw. die Fig. 4 deutlich macht. Bei diesem Vorgang kommt es dazu, dass die jeweils benachbarten Rohrsegmente 1 den fraglichen Winkel α ihrer Schrägstellung zueinander einschließen.

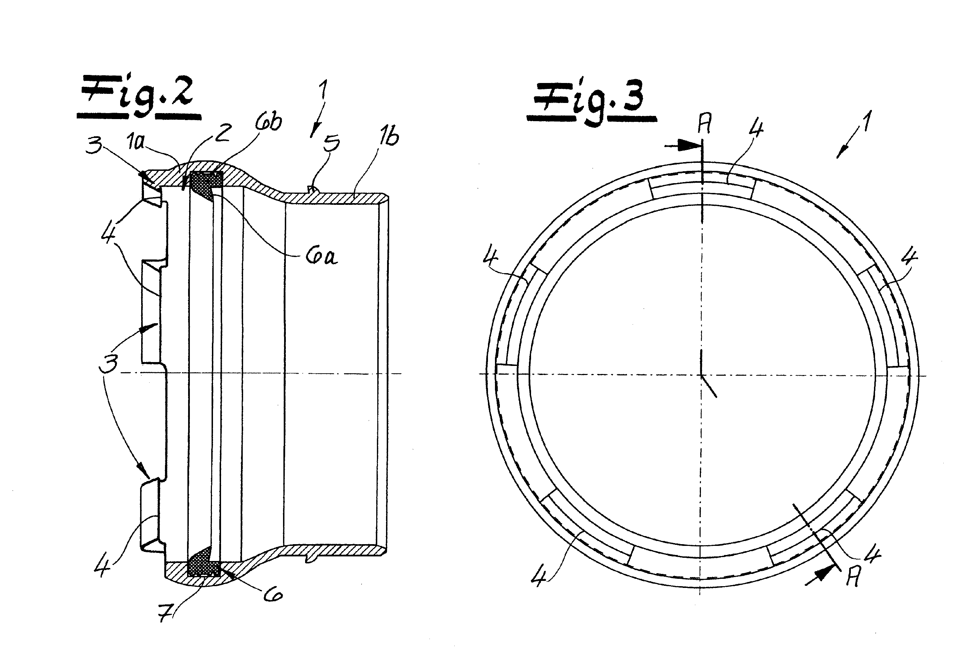

Darüber hinaus können die Rohrsegmente 1 zueinander axial in ihrer Länge verändert werden. Im Ausführungsbeispiel fällt die Axialrichtung mit der Einsteckrichtung E zusammen. Für das beschriebene Winkelspiel und auch die Längenveränderbarkeit sorgt vorliegend der Umstand, dass jedes Rohrsegment 1 mit einer Umfangsnut 2 und einem Umfangswulst 3 ausgerüstet ist. Im Ausführungsbeispiel ist die Umfangsnut 2 ringförmig ausgelegt. Demgegenüber verfügt der jeweilige Umfangswulst 3 nicht über eine durchgängige ringförmige Gestaltung, sondern setzt sich aus äquidistant über den Umfang des jeweiligen Rohrsegmentes 1 angeordneten Haken 4 zusammen. Anhand der Fig. 3 erkennt man, dass im Ausführungsbeispiel und nicht einschränkend fünf Haken 4 realisiert sind, die jeweils im Winkelabstand von 72° über den Umfang des jeweiligen Rohrsegmentes 1 angeordnet sind.

Beim Ineinanderstecken der jeweiligen Rohrsegmente 1 übergreifen die Haken 4 bzw. übergreift der Umfangswulst 3 an dem einen Rohrsegment 1 einen Anschlag 5 am benachbarten und ineinandergesteckten Rohrsegment 1. Der Anschlag 5 taucht dabei in die Umfangsnut 2 ein. Dabei ist die Auslegung so getroffen, dass der Anschlag 5 für die Haken 4 axial in der Umfangsnut 2 des benachbarten übergreifenden Rohrsegmentes 1 beweglich ist, und zwar zwischen zwei Begrenzungsanschlägen 3 bzw. 4 und 6.

Man erkennt, dass zusätzlich noch eine Umfangsdichtung 6 vorgesehen ist, die in die Umfangsnut 2 im Ausführungsbeispiel eingelassen ist. Tatsächlich wird die Umfangsdichtung 6 in einer Dichtungsnut 7 aufgenommen. Außerdem fungiert die Umfangsdichtung 6 als ein Begrenzungsanschlag 6 für den Anschlag bzw. Ringanschlag 5. Als anderer Begrenzungsanschlag 3 bzw. 4 fungiert der Umfangswulst bzw. fungieren die einzelnen Haken 4. Dadurch lässt sich der Anschlag respektive Ringanschlag 5 des eingesteckten Rohrsegmentes 1 in der Umfangsnut 2 des benachbarten übergreifenden Rohrsegmentes 1 unter Berücksichtigung des in der Fig. 4 angedeuteten axialen Spiels L in Axialrichtung bzw. Einsteckrichtung E hin- und her bewegen. Als Folge hiervon wird die gewünschte Winkelbeweglichkeit der Rohrsegmente 1 zueinander ebenso erreicht und umgesetzt wie deren Axialbeweglichkeit.

Anhand der gesamten Figuren wird deutlich, dass die Umfangsdichtung 6 im Ausführungsbeispiel und nach besonderer Bedeutung für die Erfindung als Formänderungsdichtung 6 ausgebildet ist. Tatsächlich verfügt die Umfangsdichtung bzw. Formänderungsdichtung 6 über einen formveränderlichen Fortsatz 6a, welcher beim Ineinanderstecken benachbarter Rohrsegmente 2 auf Biegung beansprucht wird, wie insbesondere die unterschiedlichen Stellungen der einzelnen Rohrsegmente 1 in der Detailvergrößerung nach Fig. 4 deutlich machen. Neben dem formveränderlichen Fortsatz 6a weist die Umfangsdichtung 6 eine den Fortsatz 6a tragende Basis 6b auf. Außerdem ist die Basis 6b mithilfe fußseitiger Rippen 6c am Grund der bereits angesprochenen Dichtungsnut 7 abgestützt.

Die Umfangsdichtung 6 ist vorliegend als kombinierte Formänderungs- sowie Kompressionsdichtung ausgelegt. Tatsächlich handelt es sich bei der Umfangsdichtung 6 um eine Lippendichtung. Außerdem ist die Umfangsdichtung 6 aus einem elastomeren Kunststoff hergestellt. Die Umfangsdichtung 6 wird in der Dichtungsnut 7 aufgenommen und kragt mit dem formveränderlichen Fortsatz 6a bzw. der Lippe 6a über einen Rand der Dichtungsnut 7 vor, wie insbesondere die Fig. 4 deutlich macht.

Sobald in ein vorhandenes Rohrsegment 1 ein benachbartes Rohrsegment 1 eingesteckt wird, erfährt der Fortsatz 6a bzw. die Lippe 6a der Umfangsdichtung 6 eine mechanische Beaufschlagung, und zwar auf Biegung. Tatsächlich wird die fragliche Umfangsdichtung 6 bzw. deren Fortsatz 6a in der Einsteckrichtung E auf Biegung beansprucht bzw. verformt. Auf diese Weise ist die Umfangsdichtung 6 mit ihrer Lippe bzw. dem Fortsatz 6a in der Lage, auch relativ große Spalte S zwischen den ineinandergesteckten Rohrsegmenten 1 überbrücken und abdichten zu können. Dadurch lassen sich die zuvor bereits beschriebenen Winkelbeweglichkeiten bzw. lässt sich der eingangs beschriebene Schrägwinkel α realisieren und umsetzen.

Bei dem Dichtungsvorgang wird nicht nur die Lippe bzw. der Fortsatz 6a der Umfangsdichtung 6 verformt bzw. erfährt eine Formänderung im Querschnitt, sondern werden zugleich auch die fußseitigen Rippen 6c an der Basis 6b der Umfangsdichtung 6 komprimiert. Dadurch handelt es sich bei der Umfangsdichtung 6 um eine kombinierte Formänderungs- sowie Kompressionsdichtung. Die Umfangsdichtung 6 selbst ist typischerweise aus einem elastomeren Kunststoff wie beispielsweise EPDM (Etylen-Propylen-Dien-Kautschuk), SBR (Styrol-Butadien-Kautschuk) oder NBR (Acrylnitril-Butadien-Kautschuk) hergestellt. Das gilt selbstverständlich nur beispielhaft und nicht einschränkend.

Die vergrößerte Darstellung in der Fig. 4 macht darüber hinaus deutlich, dass der Anschlag bzw. Ringanschlag 5 an seiner Frontseite im Vergleich zur Einsteckrichtung E über eine gerade Kante 5a verfügt. An der in Einsteckrichtung E rückwärtigen Seite bzw. Rückseite des Anschlages respektive Ringanschlages 5 ist demgegenüber eine abgerundete Kante 5b zu erkennen, und zwar jeweils im Querschnitt. Da der Anschlag bzw. Ringanschlag 5 des eingesteckten Rohrsegmentes 1 innerhalb der Umfangsnut 2 an dem übergreifenden Rohrsegment 1 in der Axialrichtung hin- und her bewegt werden kann, wechselwirkt der Anschlag 5 einerseits mit dem Umfangswulst 3 des benachbarten Rohrsegmentes 1 und andererseits mit der Umfangsdichtung 6 des benachbarten sowie übergreifenden Rohrsegmentes 1. Tatsächlich fungieren die Dichtung 6 einerseits und der Umfangswulst 3 respektive die Haken 4 andererseits als jeweilige Begrenzungsanschläge 3, 4 bzw. 6 für diese Beweglichkeit der einzelnen Rohrsegmente 1 zueinander.

Bei einem etwaigen mechanischen Kontakt des Anschlages bzw. Ringanschlages 5 mit der Umfangsdichtung 6 kommt die abgerundete Kante 5b des Anschlages 5 mit einer abgebogenen Kante des in der Einsteckrichtung E abgebogenen Fortsatzes 6a der Umfangsdichtung 6 in Wechselwirkung. Die beiden jeweils abgerundeten Kanten sorgen dafür, dass bei diesem Vorgang die Umfangsdichtung 6 insgesamt nicht beschädigt wird, gleichzeitig aber ihrer Funktion als Begrenzungsanschlag wie beschrieben nachkommt.

Das dargestellte und zuvor im Detail beschriebene flexible Schutzrohr kann an einem oder beiden Enden mit beispielsweise Verbindungsstücken zur Kopplung mit beispielsweise einem starren Schutzrohr ausgerüstet sein. Beispielsweise mag ein Ende mit einer Muffe und das andere Ende mit einem korrespondierenden Spitzendstück ausgerüstet werden. Das ist im Detail jedoch nicht dargestellt.

## Patentansprüche

1. Flexibles Schutzrohr, insbesondere Kabelschutzrohr, mit mehreren ineinander gesteckten Rohrsegmenten (1), wobei die Rohrsegmente (1) zueinander axial längenveränderlich und/oder tangential winkelveränderbar ausgebildet sind, und wobei jedes Rohrsegment (1) eine Umfangsnut (2), einen Umfangswulst (3) sowie eine Umfangsdichtung (6) aufweist, **dadurch gekennzeichnet, dass** die Umfangsdichtung (6) als Formänderungsdichtung (6) ausgebildet ist.

2. Schutzrohr nach Anspruch 1, **dadurch gekennzeichnet, dass** die Umfangsdichtung (6) als kombinierte Formänderungs- sowie Kompressionsdichtung (6) ausgelegt ist.

3. Schutzrohr nach Anspruch 1 oder 2, **dadurch gekennzeichnet, dass** die Umfangsdichtung (6) als Lippendichtung ausgebildet ist.

4. Schutzrohr nach einem der Ansprüche 1 bis 3, **dadurch gekennzeichnet, dass** die Umfangsdichtung (6) aus einem elastomeren Kunststoff hergestellt ist.

5. Schutzrohr nach einem der Ansprüche 1 bis 4, **dadurch gekennzeichnet, dass** die Umfangsdichtung (6) in einer Dichtungsnut (7) aufgenommen wird und mit zumindest einem formveränderlichen Fortsatz (6a) über einen Rand der Dichtungsnut (7) in Richtung des Rohrinneren vorkragt.

6. Schutzrohr nach Anspruch 5, **dadurch gekennzeichnet, dass** der Fortsatz (6a) der Umfangsdichtung (6) eines Rohrsegmentes (1) von dem darin eingreifenden benachbarten Rohrsegment (1) mechanisch auf Biegung beaufschlagt wird.

7. Schutzrohr nach Anspruch 4 bis 6, **dadurch gekennzeichnet, dass** die Umfangsdichtung (6) mit einer den Fortsatz (6a) tragenden Basis (6b) ausgerüstet ist.

8. Schutzrohr nach Anspruch 7, **dadurch gekennzeichnet, dass** sich die Basis (6b) mittels fußseitiger Rippen (6c) am Grund der Dichtungsnut (7) abstützt.

9. Schutzrohr nach einem der Ansprüche 1 bis 8, **dadurch gekennzeichnet, dass** sich der Umfangswulst (3) des jeweiligen Rohrsegmentes (1) aus mehreren Haken (4) zusammensetzt, welche einen Anschlag (5) am benachbarten Rohrsegment (1) übergreifen.

10. Schutzrohr nach Anspruch 9, **dadurch gekennzeichnet, dass** die Haken (4) äquidistant beabstandet über den Umfang des jeweiligen Rohrsegmentes (1) angeordnet sind.
